# EUROPEAN PATENT SPECIFICATION

(11) **EP 1 194 378 B1**
(45) Date of publication and mention of the grant of the patent: **18.08.2004**
(21) Application number: 00939870.2
(22) Date of filing: 14.06.2000
(51) Int. Cl.: C01G 23/047, C01G 23/053, C09C 1/36

(54) **PROCESSING AQUEOUS TITANIUM SOLUTIONS TO TITANIUM DIOXIDE PIGMENT**
HERSTELLUNG VON TITANDIOXID PIGMENTEN AUS WÄSSRIGEN, TITANHALTIGEN LÖSUNGEN
TRAITEMENT DE SOLUTIONS AQUEUSES DE TITANE AFIN DE FORMER UN PIGMENT DIOXYDE DE TITANE

(30) Priority: 24.06.1999 US 141057 P; 24.06.1999 US 141114 P; 06.08.1999 US 147702 P; 07.02.2000 US 500207; 14.02.2000 US 503636
(43) Date of publication of application: 10.04.2002
(73) Proprietor: Altair Technologies Inc., Reno, NV 89502 (US)
(72) Inventor: DUYVESTEYN, Willem, P., C., Reno, NV 89511 (US); SPITLER, Timothy, Malcome, Fernley, NV 89408 (US); SABACKY, Bruce, James, Reno, NV 89511 (US); VINCE, Andrew, Moranbah, QLD 4744 (AU); PROCHAZKA, Jan, Reno, NV 89503 (US)
(74) Representative: Hayes, Adrian Chetwynd
(86) International application number: PCT/US2000/016360
(87) International publication number: WO 2001/000530

(56) References cited:
- EP-A- 0 016 583
- WO-A-97/10185
- WO-A-97/30130
- DE-C- 19 725 616
- GB-A- 2 166 126
- US-A- 5 698 205

## Description

The present invention relates to a process for producing titanium dioxide of a pigment grade, parts of the process, and the product of the process. In particular, the present invention relates to the processing of aqueous titanium solutions derived from treatment of titanium ores to TiO₂ pigment. The process includes a novel combination of operational steps to economically produce a high quality grade titanium dioxide pigment.

### BACKGROUND OF THE INVENTION

Titanium dioxide is considered the principal white pigment of commerce. It has exceptionally high refractive index, negligible color, and is quite inert. Titanium dioxide may be present in either of two predominant forms, anatase or rutile. For the majority of commercial applications, rutile is the desired form.

There are two main processes for making raw pigmentary titanium dioxide, the sulfate process and the chloride process. The sulfate process is based on the digestion of ilmenite or titania slag in concentrated sulfuric acid. After iron removal as iron sulfate, the solution is heated and diluted with water. The titanium hydrolyzes, forming a titanium oxysulfate precipitate, which is further treated to produce TiO₂ pigment. The chloride process relies on chlorination of low-iron, titanium containing ore or intermediate products to form TiCl₄, followed by the gas-phase oxidation of TiCl₄.

Alternative methods based on hydrochloric acid leaching of titaniferous ore have been proposed. One example is disclosed in U.S. Pat. No. 3,903,239. There, the process includes the hydrolysis of titanium oxide from a chloride solution by heating and dilution. The hydrolysis step is similar to the hydrolysis procedure conventionally used in the sulfate process.

Hydrolysis by heating and dilution with water presents a number of disadvantages. It creates large volumes of dilute acid solutions that are expensive to recycle and the disposal of which presents environment problems. The very fine, hydrolyzed TiO₂ has to be removed from a large volume of solution, generally by filtration. The conditions of hydrolysis have to be adjusted to make the resulting suspension filterable, which limits flexibility in choosing hydrolysis conditions. Chemical control additives can be introduced in solution prior to hydrolysis to influence the characteristics of the product, but the additives are generally not homogeneously distributed over the mass of the TiO₂ product, and their effectiveness is less than optimal.

The present invention makes it possible to produce a high quality titanium dioxide pigment from an aqueous titanium solution without the disadvantages mentioned. It is particularly well suited when a titanium solution of high purity is available. For example, the solution can be derived from the process disclosed in U.S. 6,440,383, and to U.S. 6,375,923.

### SUMMARY OF THE INVENTION

The present invention relates to an economical hydrometallurgical process for producing pigment grade TiO₂ from aqueous titanium solutions. The solutions may be derived from any of several sources, but are generally derived from processing mineral ores and, in particular, ilmenite ore. The processing to produce the solutions can be, for instance, a leaching or dissolution process, followed by any of several means for solution purification. For example, the solution can be derived from the process disdosed in U.S. 6,440,383 and to U.S. 6,375,923. Alternatively, the processing to produce the solution can be from a chlorination process where the TiCl₄ is dissolved in water or a hydrochloric acid solution. Furthermore, the process according to this invention is not limited to solutions containing titanium and chloride, but titaniferous sulfate and titaniferous nitrate solutions can also be used.

In one embodiment, the solutions are aqueous titanium chloride solutions and are comprised of water, hydrochloric acid, titanium oxychlorides, and titanium chlorides. These solutions may vary widely in composition with the respect to the hydrochloric acid content and the titanium content.

The titanium chloride solutions are first converted to a titanium oxide solid in a controlled temperature, total evaporation process at a temperature higher than the boiling point of the solution, but below the temperature where there is significant crystal growth.

The process includes evaporation of the solution in a controlled manner, hydrolysis to form amorphous titanium oxide, further evaporation and drying of the product. It generally involves the formation of a thin film of titanium oxide. The process is preferably effected by spraying and is referred to herein as spray hydrolysis. Spray hydrolysis can be accomplished in a spray dryer, or any other suitable piece of equipment. The gas phase formed as a result of evaporation, contains acid and water, and can be further processed to regenerate the acid (hydrochloric, sulfuric, or nitric acid).

The titanium oxide is then calcined at an elevated temperature to transform the oxide to a desired crystalline form of titanium dioxide suitable for use as a white pigment. The desired crystalline form is usually the rutile form of titanium dioxide but, depending upon the type of chemical additives used, the anatase form can also be produced in this process.

Following calcination, the titanium dioxide is milled to produce the desired particle size distribution suitable for use as a white pigment. The milling may be by wet milling.

Finally, the milled titanium dioxide is dewatered, usually by filtration, and optionally dried, usually by spray drying, to yield a final titanium dioxide white pigment.

The advantages of the process according to the present invention include a high quality titanium dioxide pigment, readily controlled physical and chemical characteristics of the pigment product, and low cost processing, since dilution of the solution is avoided and the acid in the gases can be recycled.

### BRIEF DESCRIPTION OF THE DRAWINGS

FIG. 1 is a flow sheet of the general aspect of the process according to the invention.
FIG. 2 is a flow sheet of a preferred embodiment of the process according to the present invention, including vacuum evaporation of the solution before hydrolysis, followed by spray hydrolysis.
FIG. 3 is a flow sheet of a preferred finishing process.
FIG. 4 is a photograph of titanium dioxide base material after spray hydrolysis at a temperature of 200° C with no chemical control agents added to solution. The material was produced according to the present invention and is magnified 5,000 fold.
FIG. 5 is a photograph of a titanium dioxide base material after calcination at 900° C for 1 hour and with no chemical control agents present. The base material was produced according to the present invention wherein the hydrolysis was accomplished by spray hydrolysis. The shown particle was magnified 5,000 fold.
FIG. 6 is a photograph of a titanium dioxide base material after calcination at 920° C for 2 hours and with an amount of phosphoric acid equivalent to 2% of the amount of TiO₂, added to the solution. The base material is anatase. It was produced according to the present invention wherein the hydrolysis was accomplished in a spray dryer. The shown particle was magnified 200,000 fold.
Fig 7 is a photograph of a titanium dioxide base material after calcination at 920° C for 90 min and with an amount of Sn equivalent to 1 % of the amount of TiO2, added to the solution as SnCl₂•2H₂O. The base material is rutile and was produced according to the present invention wherein the hydrolysis was accomplished in a spray dryer. The shown particle was magnified 25,000 fold.

### DETAILED DESCRIPTION OF THE INVENTION

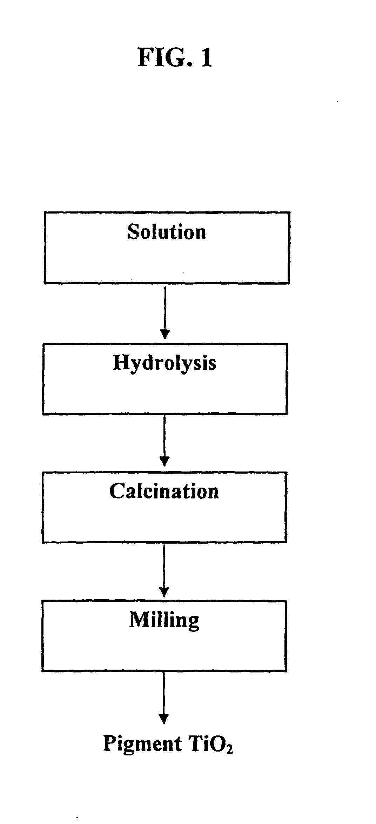

The present invention is a hydrometallurgical process for producing pigment grade TiO₂ from aqueous titanium solutions. Referring now to FIG. 1, the general process according to the present invention is shown. In this process, a solution containing titanium is hydrolyzed by complete evaporation. The hydrolysis product is further calcined and milled to provide a commercial grade titanium dioxide pigment.

### Titanium Solutions

The solutions may be derived from any of several sources, but are generally derived from processing mineral ores and, in particular, ilmenite ore or ilmenite mineral concentrates. The processing to produce the solutions can be, for instance, a leaching or dissolution process, followed by any of several means for solution purification. For example, the solution can be derived from the process disclosed in U.S. 6,440,383 and 6,375,923. Solutions produced by this process contain low levels of impurities. Preferably, the ratio of the impurity content of coloring impurities (such as Fe, Cr, Ni, V, etc.) to the amount of Ti in solution is such that the hydrolysis product contains no more than 20 ppm of these impurities. For example if a final TiO₂ product purity of 10 ppm Fe is required, a starting solution containing with 50 gpl Ti should contain no more than 3-4 ppm Fe impurity, assuming that all Fe reports to the TiO₂ product. Such low solution impurity concentrations are not readily achieved using conventional processing technologies.

In one embodiment, the solutions are aqueous titanium chloride solutions and are comprised of water, hydrochloric acid, titanium oxychlorides, and titanium chlorides. These solutions may vary widely in composition with the respect to the hydrochloric acid content and the titanium content.

While the titanium solutions may be derived from a variety of sources, the present invention will now be particularly described with reference to aqueous titanium chloride solutions. It is to be understood that the reference to aqueous titanium chloride solutions is not meant to limit the applicability of the process of the present invention but is meant only to simplify the description.

The aqueous titanium chloride solutions are comprised of water, hydrochloric acid, and titanium oxychlorides and titanium chlorides. The solutions may vary widely in composition with the respect to the hydrochloric acid content and the titanium content. The content of the solution may vary from about 3 weight % acid to as high as 40 weight percent hydrochloric acid and the titanium content may vary from as low as 30 grams per liter of titanium to as high as 200 grams per liter titanium.

The source of the titanium chloride solution may be from any known process in which chloride is used during the processing of titanium containing material. For example, the titanium chloride solution may be derived from the processing of titaniferous ores using hydrochloric acid.

Alternatively, the titanium chloride solution may be derived from the conventional chlorination of titanium material where TiCl₄ is produced. In this instance, the TiCl₄ can readily be dissolved in water to form the titanium chloride solution. Alternatively, titanyl sulfate can readily be dissolved in a nitric acid, sulfuric acid, or hydrochloric acid solution.

Additionally and optionally, minor quantities of chemical control agents may be introduced into the titanium chloride solution to control the physical and mineralogical characteristics of the solid titanium dioxide product resulting from the conversion of the solution. The chemical control agent is selected from the group consisting of chloride salts, fluoride salts, sulfate salts, carbonate salts, phosphate salts of a metal, phosphoric acid, and mixtures thereof. These chemical control and seeding agents can be, but are not limited to, the chloride salts of lithium, sodium, potassium, aluminum, tin, zinc and mixtures thereof. Carbonate, fluoride, sulfate and other suitable salts of the same aforementioned elements/may be used. Additionally, phosphoric acid and phosphate salts of the aforementioned elements may be used. Furthermore, a number of organic additives may also be used. They include, but are not limited to: organic acids such oxalic, citric, stearic, etc.; salts from these organic acids and inorganic compounds; other organic additives, such as polyacrylates, glycols, siloxane and mixtures thereof and their compounds.

### Vacuum Evaporation

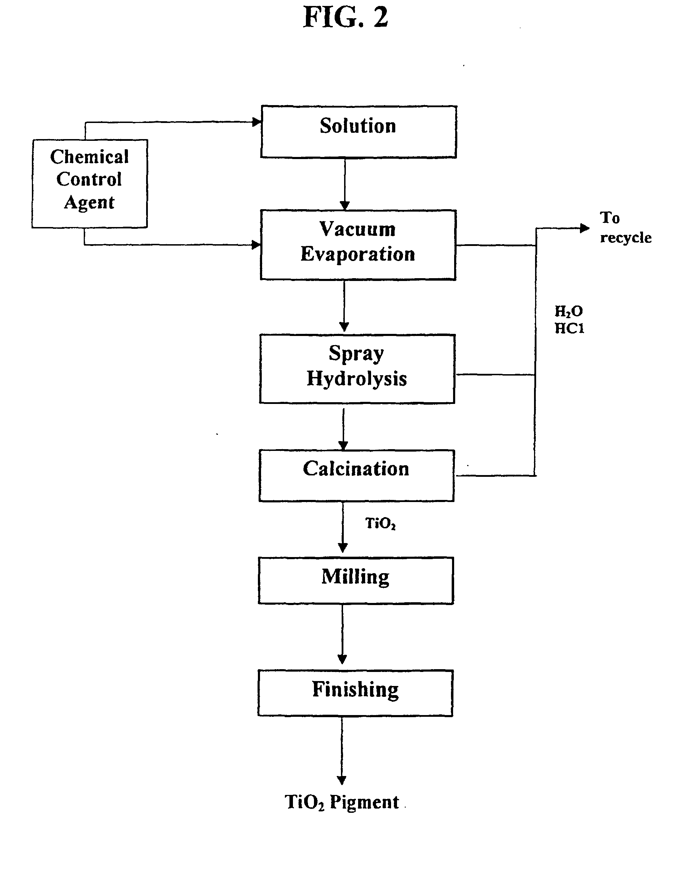

Referring to FIG. 2, a preferred embodiment of the present invention is shown. In this embodiment, the titanium chloride solution, with or without chemical control agents added, may be concentrated with respect to titanium content by any of several methods of vacuum evaporation. The solutions can be vacuum evaporated under conditions to inhibit formation of titanium dioxide while removing excess water and HCl as vapors.

### Hydrolysis

Hydrolysis is accomplished in a controlled temperature, total evaporation process at a temperature higher than the boiling point of the solution, but lower than the temperature where significant crystal growth occurs. This temperature is generally in the range from about 120° C. to about 350°C., preferably in the range from about 200° C. to about 250°C.

In this process, any chemical control additives added to the solution are homogeneously distributed throughout the solid product.

Preferably, hydrolysis is accomplished by spraying the solution while it is heated at a temperature in the range from about 120°C. to about 350°C. and preferably in the range from about 200°C. to about 250°C. This process is called spray hydrolysis. Spray hydrolysis can be effected in a spray dryer, or any other piece of equipment that can provide controlled evaporation and hydrolysis conditions.

Preferably, the conditions of spray hydrolysis will be chosen to produce hollow thin-film spheres or parts of spheres having a diameter in the range from about 1 to about 100 µm and a film thickness in the range of about 0.1 to 5 µm, most preferably in the range of about 0.2 µm to about 1 µm. The resulting titanium oxide will be an amorphous, polymeric titanium oxide particle. After calcination and milling, these spheres yield elementary crystalline particles with a narrow size distribution corresponding to high quality pigment.

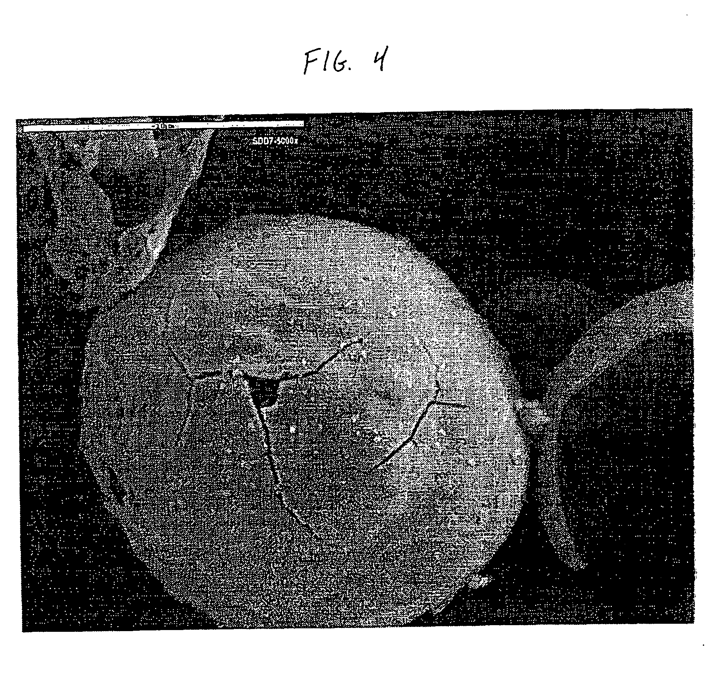

FIG. 4 shows an example of a titanium oxide particle that was produced by spray hydrolysis of a titanium containing solution at a temperature of 200°C.

Without being bound by any theory, it is believed that spray hydrolysis at a relatively low temperature yields an amorphous solid. as a thin film that can readily be converted to pigment grade rutile or to anatase depending on the types of chemical controls introduced in the titanium chloride feed solutions and on the physical parameters utilized in the spray hydrolysis operation. Spray hydrolysis also has the advantage of direct processing of the solution so that the formation of titanium dioxide and evaporation of water and HCl are simuttaneously accomplished. The HCL and water are recovered when the titanium solution is a titanium or titanyl sulfate solution or a titanium or titanyl nitrate solution, a sulfuric acid and water mixture or a nitric acid and water mixture is formed and recovered respectively.

### Calcination

The titanium oxide product resulting from the spray hydrolysis operation is calcined at a temperature sufficient to convert the amorphous oxide to titanium dioxide of the desired crystal structure. Calcination temperatures can range between about 500° C to over 1100° C. The calcination temperature is, however, less than that for which particle sintering occurs. Preferably, the calcination is conducted at temperatures ranging from about 800° C to about 1000° C., and more preferably between about 900°C and about 975°C.

During calcination, any residual chloride or residual organic carbon in the amorphous oxide feed is expelled as HCl or CO₂ gas.

Additionally and optionally, chemical control agents may be added to the amorphous oxide just prior to calcination to promote and control conversion of the oxide to the desired crystal structure and other physical characteristics such as crystal size and millability. These chemical control agents can be but are not limited to the chloride salts of lithium, sodium, potassium, aluminum, tin, and zinc. Carbonate salts, sulfate salts and fluoride salts of the same aforementioned elements may also be used. Additionally, phosphoric acid and/or phosphate salts of the aforementioned elements may be used. Furthermore, a number of organic additives may also be used. They include, but are not limited to: organic acids such oxalic, citric, stearic, etc.; salts from these organic acids and an inorganic compounds; other organic additives, such as polyacrylates, glycols, siloxane and their compounds.

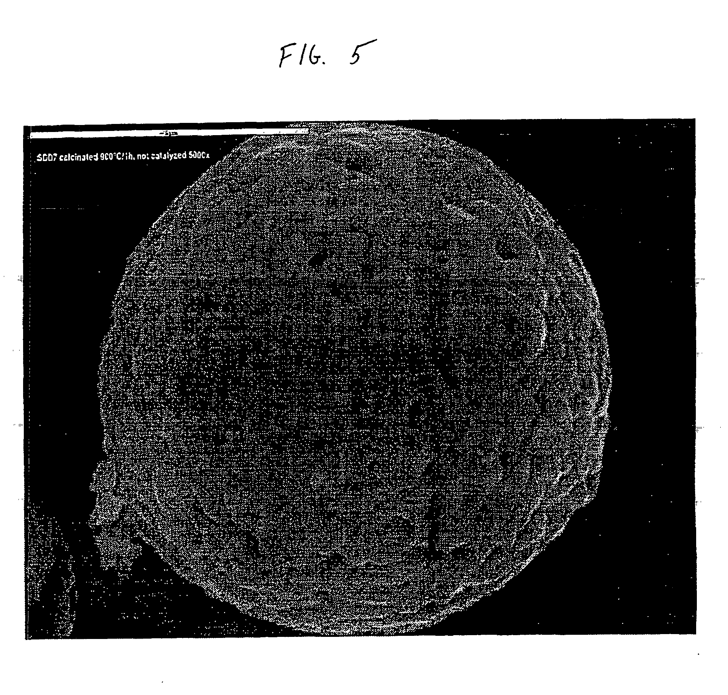

FIG. 5 shows a photograph of a titanium dioxide base material that has been calcined at 900° for one hour with no chemical control agents present. The photograph shows that the amorphous surface of the spray dried titanium dioxide material particle (shown in FIG. 4) has been converted into a crystal-type structure. This particle can then be milled to break the crystal-type structure into the resulting titanium dioxide pigment particles.

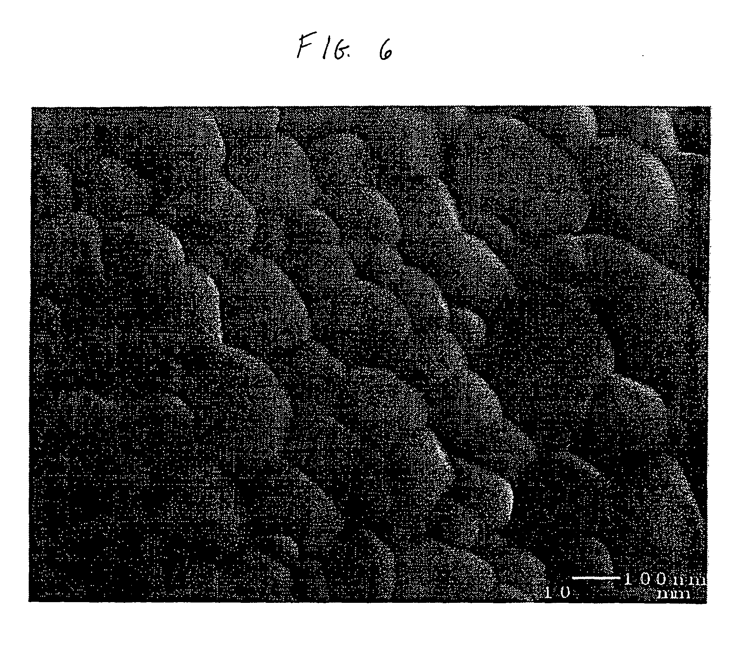

FIG. 6 shows a photograph of a titanium dioxide base material after calcination at 920°C for 2 hours and with an amount of phosphoric acid equivalent to 2% of the amount of TiO₂, added to the solution. The base material is anatase. It was produced according to the present invention wherein the hydrolysis was accomplished in a spray dryer. The shown particle was magnified 200,000 fold.

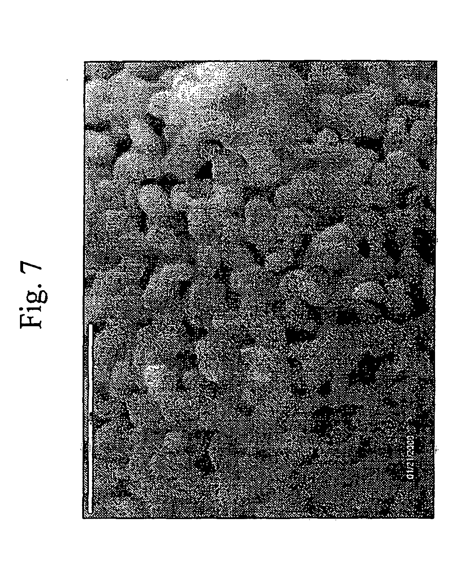

FIG. 7 is a photograph of a titanium dioxide base material after calcination at 920° C for 90 min and with an amount of Sn equivalent to 1 % of the amount of TiO2, added to the solution as SnCl₂•2H₂O. The base material is rutile and was produced according to the present invention wherein the hydrolysis was accomplished in a spray dryer. The shown particle was magnified 25,000 fold.

### Milling and Finishing

After calcination, the titanium dioxide contains greater than 99.5% of either anatase or rutile (not counting the chemical additives), depending on the conditions and chemical control agents used in spray hydrolysis/drying and calcination. In any event, the titanium dioxide is preferably finished to produce a white pigment suitable for commercial sale.

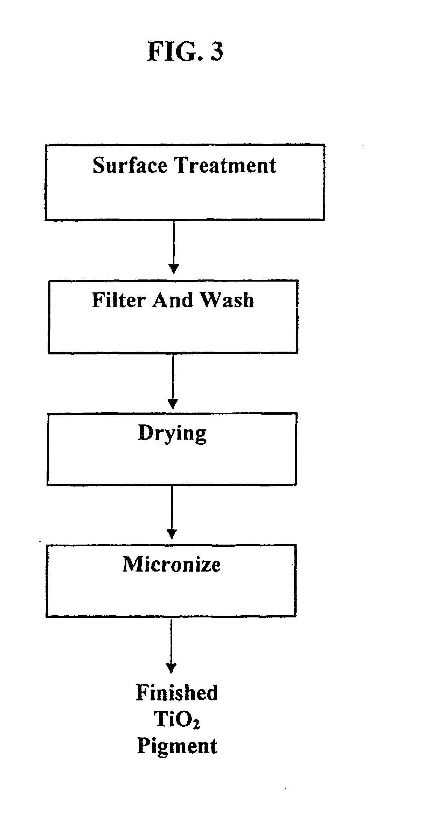

The finishing process may include one or more of wet milling, filtering, washing, and packaging. In addition, the finishing can include a surface treatment step such as silica and alumina treatment, followed by spray drying and micronizing prior to packaging. The surface treatment step generally includes precipitating alumina, silica, zirconia, or other metal oxides, on the surface of the titanium dioxide. The purpose of this treatment is to impart photo stability, shelf life, dispersability, and flowability. FIG. 3 shows a preferred flow sheet of a finishing process

The following examples illustrate, but do not limit, the present invention. Unless otherwise indicated, all parts and percentages are by weight.

### Example I

A solution containing 53 g/l Ti and 210 g/l Cl was made according to the process described in U.S. 6,375,923. An amount of phosphoric acid equivalent to 2% of the amount of TiO₂ was added to the solution. The solution was fed to a spray hydrolyzer, consisting of a reaction chamber followed by bag filters and an HCl absorption system. The solution was injected at a rate of 2.25 liters/min through an atomizing disk. Gases from the combustion of natural gas, diluted with air to 550° C, were also injected around the disk. The outlet temperature was 250° C, and the total gas flow rate 800 scfm.

The product recovered on the bag filter was calcined at 920° C for 2 hours. Fig. 6 is a scanning electron micrograph of the product after calcination, showing a particle size of the order of 250 nanometer. X-Ray diffraction analysis showed that the product is anatase.

### Example II

The same solution used in Example I is used in the same conditions in the spray hydrolyzer and calciner, the only difference being that an amount of Sn equivalent to 1% of the amount of TiO₂ was added to the solution as SnCl₂.2H₂O instead of phosphoric acid. Figure 7 depicts a scanning electron micrograph of the product, showing elemental crystals of about 200 nanometer in size. X-Ray diffraction analysis shows that the product is rutile.

### Example III

A number of small samples of solution were made by mixing a solution containing 53 g/l Ti and 210 g/l Cl with different additives. The main features are jointly presented in the following table. Except for the additives, the experimental conditions are the same as those of Examples I and II. The following table summarizes the most significant results.

**Table 1**

| | Chemical additive (as wt-% in TiO₂) | Added as | Average size of product particles (nanometer) | Crystal type |
|---|---|---|---|---|
| 1. | 0.38% P, 6.3% Sn | N₃PO₄, SnCl₂·2H₂O | 150 | Rutile |
| 2. | 2.7% P | KH₂PO₄ | 200 | Anatase |
| 3. | 0.38% P, 0.2% SiO₂ | H₃PO₄, Na₂SiO₃ | 100-1000 (needles) | Rutile |
| 4. | 6.6% Sn | SnSO₄ | 200 | Rutile |
| 5. | 9% Sn | SnF₂ | 200 | Rutile |

## Claims

1. A process for producing pigment-grade titanium dioxide from an aqueous titanium solution comprising:
a. hydrolyzing the solution in a controlled temperature, total evaporation process at a temperature higher than the boiling point of the solution but lower than the temperature where crystallization becomes significant to form titanium oxide particles;
b. calcining the titanium oxide particles to remove residual water and acid and to form the desired titanium dioxide crystal structure; and,
c. milling the calcined titanium dioxide to the desired particle size distribution

2. The process of claim 1 wherein the hydrolyzing step successively evaporates part of the solution, hydrolyzes the titanium in solution as titanium dioxide, evaporates the remainder of the solution, and dries a resulting solid titanium dioxide product.

3. The process of claim 1 wherein the titanium solution is a titanium chloride solution.

4. The process of claim 1 wherein the titanium solution is a titanium or titanyl sulfate solution.

5. The process of claim 1 wherein the titanium solution is a titanium or titanyl nitrate solution.

6. The process of claim 3 wherein the hydrolyzing step includes forming a hydrochloric acid and water mixture.

7. The process of claim 6 wherein the hydrochloric acid and water are recovered.

8. The process of claim 4 wherein the hydrolyzing step includes forming a sulfuric acid and water mixture.

9. The process of claim 8 wherein the sulfuric acid and water are recovered.

10. The process of claim 5 wherein the hydrolyzing step includes forming a nitric acid and water mixture.

11. The process of claim 10 wherein the nitric acid and water are recovered.

12. The process of claim 1 wherein the hydrolysis step is conducted at a temperature between about 120°C. and about 350°C.

13. The process of claim 1 further comprising the successive steps of washing, filtering, and drying the milled titanium dioxide.

14. The process of claim 3 wherein the titanium chloride solution is concentrated by vacuum evaporation before hydrolysis.

15. The process of claim 1 wherein the hydrolyzed titanium oxide is produced by spraying in a reactor as a thin film.

16. The process of claim 15 wherein the reactor is a spray dryer.

17. The process of claim 16 wherein the operating temperatures used in the spray dryer are between about 120°C and about 350°C.

18. The process of claim 1 further comprising adding a chemical control agent to the titanium solution before hydrolysis and drying.

19. The process of claim 18 wherein the chemical control agent is selected from the group consisting of chloride salts, fluoride salts, sulfate salts, carbonate salts, phosphate salts of a metal, phosphoric acid, and mixtures thereof.

20. The process of claim 18 wherein the chemical control agent is selected from the group consisting of organic acids selected from the group consisting of oxalic, citric, stearic, salts of these organic acids, polyacrylates, glycols, siloxanes, and mixtures thereof.

21. The process of claim 18 wherein the chemical control agent is selected from the group consisting of organic acids selected from the group consisting of oxalic, citric, stearic, salts of these organic acids, inorganic compounds, organic additives selected from the group consisting of polyacrylates, glycols, siloxanes, and mixtures thereof.

22. The process of claim 18 wherein the chemical control agent is a salt having a cation selected from the group consisting of lithium, sodium, potassium, aluminum, tin, zinc, and mixtures thereof.

23. The process of claim 15 wherein the titanium oxide is a hollow thin-film spheres or parts of spheres.

24. The process of claim 23 wherein the average diameter of the titanium oxide hollow thin-film spheres or parts of spheres is between about 1 and about 100 µm (microns).

25. The process of claim 23 wherein the film thickness is between about 0.1 µm (microns) and about 5 µm (microns).

26. The process of claim 1 wherein the calcining is performed at a temperature between about 500° C and about 1100°C.

27. The process of claim 1 wherein the calcining is performed at a temperature between about 900°C and about 975°C.

28. The process of claim 15 wherein the calcining is performed at a temperature between about 800°C and about 1000°C.

29. The process of claim 16 wherein the calcining is performed at a temperature between about 800°C and about 1000°C.

30. The process of claim 3 wherein the titanium chloride solution is derived from chlorination of a titanium containing ore.

## Patentansprüche

1. Verfahren zur Herstellung von Titandioxid mit Pigmentgüte aus einer wässrigen Titanlösung umfassend:
a) Hydrolysieren der Lösung bei einer gesteuerten Temperatur, Verfahren zur vollständigen Verdunstung bei einer Temperatur, die höher ist als der Siedepunkt der Lösung, jedoch niedriger als die Temperatur, bei welcher die Kristallisation beträchtlich wird, um Titanoxidteilchen zu bilden;
b) Calcinieren der Titanoxidteilchen, um das restliche Wasser und die Säure zu entfernen und um die gewünschte Titanoxid-Kristallstruktur zu bilden; und
c) Mahlen des calcinierten Titandioxids auf die gewünschte Teilchengrößenverteilung.

2. Verfahren nach Anspruch 1, wobei der Hydrolysierschritt aufeinanderfolgend Teile der Lösung verdampft, das Titan in der Lösung als Titandioxid hydrolysiert, den Rest der Lösung verdampft und das restliche feste Titandioxid-Erzeugnis trocknet.

3. Verfahren nach Anspruch 1, wobei die Titanlösung eine Titanchloridlösung ist.

4. Verfahren nach Anspruch 1, wobei die Titanlösung eine Titan- oder Titanylsulfatlösung ist.

5. Verfahren nach Anspruch 1, wobei die Titanlösung eine Titan- oder Titanylnitratlösung ist.

6. Verfahren nach Anspruch 3, wobei der Hydrolysierschritt das Bilden einer Salzsäureund Wassermischung umfasst.

7. Verfahren nach Anspruch 6, wobei die Salzsäure und das Wasser zurückgewonnen werden,

8. Verfahren nach Anspruch 4, wobei der Hydrolysierschritt das Bilden einer Schwefelsäure- und Wassermischung umfasst.

9. Verfahren nach Anspruch 8, wobei die Schwefelsäure und das Wasser zurückgewonnen werden.

10. Verfahren nach Anspruch 5, wobei der Hydrolysierschritt das Bilden einer Salpetersäure- und Wassermischung umfasst.

11. Verfahren nach Anspruch 10, wobei die Salpetersäure und das Wasser zurückgewonnen werden.

12. Verfahren nach Anspruch 1, wobei der Hydrolysierschritt bei einer Temperatur zwischen ungefähr 120°C und ungefähr 350°C durchgeführt wird.

13. Verfahren nach Anspruch 1, des weiteren umfassend die nachfolgenden Schritte des Waschens, Filtrierens und Trocknens des gemahlenen Titandioxids.

14. Verfahren nach Anspruch 3, wobei die Titanchloridlösung durch Vakuumverdampfung vor der Hydrolyse konzentriert wird.

15. Verfahren nach Anspruch 1, wobei das hydrolysierte Titanoxid durch Sprühen in einem Reaktor als eine dünne Schicht erzeugt wird.

16. Verfahren nach Anspruch 15, wobei der Reaktor ein Sprühtrockner ist.

17. Verfahren nach Anspruch 16, wobei die Betriebstemperaturen, die in dem Sprühtrockner eingesetzt werden, zwischen ungefähr 120°C und ungefähr 350°C liegen.

18. Verfahren nach Anspruch 1, des weiteren umfassend das Zugeben eines chemischen Steuerungsmittels zu der Titanlösung vor der Hydrolyse und dem Trocknen.

19. Verfahren nach Anspruch 18, wobei das chemische Steuerungsmittel gewählt ist aus der Gruppe bestehend aus Chloridsalzen, Fluoridsalzen, Sulfatsalzen, Carbonatsalzen, Phosphatsalzen eines Metalls, Phosphorsäure und deren Mischungen.

20. Verfahren nach Anspruch 18, wobei das chemische Steuerungsmittel gewählt ist aus der Gruppe bestehend aus organischen Säuren gewählt aus der Gruppe bestehend aus Oxalsäure, Zitronensäure, Stearinsäuren, Salzen dieser organischen Säuren, Polyacrylaten, Glykolen, Siloxanen und Mischungen dieser.

21. Verfahren nach Anspruch 18, wobei das chemische Steuerungsmittel gewählt ist aus der Gruppe bestehend aus organischen Säuren gewählt aus der Gruppe bestehend aus Oxalsäure, Zitronensäure, Stearinsäuren, Salzen dieser organischen Säuren, anorganischen Verbindungen, organischen Zusätzen, gewählt aus der Gruppe bestehend aus Polyacrylaten, Glykolen, Siloxanen und deren Mischungen.

22. Verfahren nach Anspruch 18, wobei das chemische Steuerungsmittel ein Salz ist, mit einem Kation, gewählt aus der Gruppe bestehend aus Lithium, Natrium, Kalium, Aluminium, Zinn, Zink und deren Mischungen.

23. Verfahren nach Anspruch 15, wobei das Titanoxid hohle Dünnfilmkugeln ist.

24. Verfahren nach Anspruch 23, wobei der mittlere Durchmesser der hohlen Dünnschicht-Titanoxidkugeln oder der Teile von Kugeln zwischen ungefähr 1 und ungefähr 100 µm (Mikron) liegt.

25. Verfahren nach Anspruch 23, wobei die Schichtdicke zwischen ungefähr 0,1 µm (Mikron) und ungefähr 5 µm (Mikron) liegt.

26. Verfahren nach Anspruch 1, wobei das Calcinieren bei einer Temperatur zwischen ungefähr 500°C und ungefähr 1.100°C durchgeführt wird.

27. Verfahren nach Anspruch 1, wobei das Calcinieren bei einer Temperatur zwischen ungefähr 900°C und ungefähr 975°C durchgeführt wird.

28. Verfahren nach Anspruch 15, wobei das Calcinieren bei einer Temperatur zwischen ungefähr 800°C und ungefähr 1.000°C durchgeführt wird.

29. Verfahren nach Anspruch 16, wobei das Calcinieren bei einer Temperatur zwischen ungefähr 800°C und ungefähr 1.000°C durchgeführt wird.

30. Verfahren nach Anspruch 3, wobei die Titanchloridlösung durch Chlorierung eines titanhaltigen Erzes abgeleitet wird.

## Revendications

1. Procédé pour produire du dioxyde de titane de qualité pigmentaire à partir d'une solution aqueuse de titane comprenant :
a. l'hydrolyse de la solution dans un procédé d'évaporation totale, à température contrôlée à une température supérieure au point d'ébullition de la solution mais inférieure à la température à laquelle la cristallisation devient significative pour former des particules d'oxyde de titane ;
b. la calcination des particules d'oxyde de titane pour éliminer l'eau et l'acide résiduels et pour former la structure du cristal de dioxyde de titane désirée ; et,
c. le broyage du dioxyde de titane calciné pour obtenir la distribution de taille de particule désirée.

2. Procédé selon la revendication 1 dans lequel l'étape d'hydrolyse successivement évapore une partie de la solution, hydrolyse le titane en solution en dioxyde de titane, évapore le reste de la solution, et sèche un produit de dioxyde de titane solide résultant.

3. Procédé selon la revendication 1 dans lequel la solution de titane est une solution de chlorure de titane.

4. Procédé selon la revendication 1 dans lequel la solution de titane est une solution de sulfate de titane ou de sulfate de titanyle.

5. Procédé selon la revendication 1 dans lequel la solution de titane est une solution de nitrate de titane ou de nitrate de titanyle.

6. Procédé selon la revendication 3 dans lequel l'étape d'hydrolyse comprend la formation d'un mélange d'acide chlorhydrique et d'eau.

7. Procédé selon la revendication 6 dans lequel l'acide chlorhydrique et l'eau sont récupérés.

8. Procédé selon la revendication 4 dans lequel l'étape d'hydrolyse comprend la formation d'un mélange d'acide sulfurique et d'eau.

9. Procédé selon la revendication 8 dans lequel l'acide sulfurique et l'eau sont récupérés.

10. Procédé selon la revendication 5 dans lequel l'étape d'hydrolyse comprend la formation d'un mélange d'acide nitrique et d'eau.

11. Procédé selon la revendication 10 dans lequel l'acide nitrique et l'eau sont récupérés.

12. Procédé selon la revendication 1 dans lequel l'étape d'hydrolyse est effectuée à une température entre environ 120°C et environ 350°C.

13. Procédé selon la revendication 1 comprenant en plus les étapes successives de lavage, de filtration, et de séchage du dioxyde de titane broyé.

14. Procédé selon la revendication 3 dans lequel la solution de chlorure de titane est concentrée par évaporation sous vide avant l'hydrolyse.

15. Procédé selon la revendication 1 dans lequel l'oxyde de titane hydrolysé est produit par pulvérisation dans un réacteur sous forme d'un film fin.

16. Procédé selon la revendication 15 dans lequel le réacteur est un séchoir-atomiseur.

17. Procédé selon la revendication 16 dans lequel les températures opératoires utilisées dans le séchoir-atomiseur sont entre environ 120°C et environ 350°C.

18. Procédé selon la revendication 1 comprenant en plus l'ajout d'un agent de contrôle chimique à la solution de titane avant l'hydrolyse et le séchage.

19. Procédé selon la revendication 18 dans lequel l'agent de contrôle chimique est choisi dans le groupe comprenant les sels de chlorure, les sels de fluorure, les sels de sulfate, les sels de carbonate, les sels de phosphate d'un métal, l'acide phosphorique, et les mélanges de ceux-ci.

20. Procédé selon la revendication 18 dans lequel l'agent de contrôle chimique est choisi dans le groupe comprenant des acides organiques choisis dans le groupe comprenant l'acide oxalique, l'acide citrique, l'acide stéarique, les sels de ces acides organiques, les polyacrylates, les glycols, les siloxanes, et les mélanges de ceux-ci.

21. Procédé selon la revendication 18 dans lequel l'agent de contrôle chimique est choisi dans le groupe comprenant des acides organiques choisis dans le groupe comprenant l'acide oxalique, l'acide citrique, l'acide stéarique, les sels de ces acides organiques, des composés inorganiques, des additifs organiques choisis dans le groupe comprenant les polyacrylates, les glycols, les siloxanes, et les mélanges de ceux-ci.

22. Procédé selon la revendication 18 dans lequel l'agent de contrôle chimique est un sel ayant un cation choisi dans le groupe comprenant le lithium, le sodium, le potassium, l'aluminium, l'étain, le zinc, et les mélanges de ceux-ci.

23. Procédé selon la revendication 15 dans lequel l'oxyde de titane est sous forme de sphères ou parties de sphères creuses à film fin.

24. Procédé selon la revendication 23 dans lequel le diamètre moyen de l'oxyde de titane sous forme de sphères ou parties de sphères creuses à film fin est entre environ 1 µm et environ 100 µm.

25. Procédé selon la revendication 23 dans lequel l'épaisseur du film est entre environ 0,1 µm et environ 5 µm.

26. Procédé selon la revendication 1 dans lequel la calcination est effectuée à une température entre environ 500°C et environ 1100°C.

27. Procédé selon la revendication 1 dans lequel la calcination est effectuée à une température entre environ 900°C et environ 975°C.

28. Procédé selon la revendication 15 dans lequel la calcination est effectuée à une température entre environ 800°C et environ 1000°C.

29. Procédé selon la revendication 16 dans lequel la calcination est effectuée à une température entre environ 800°C et environ 1000°C.

30. Procédé selon la revendication 3 dans lequel la solution de chlorure de titane provient de la chloration d'un minerai contenant du titane.
